# EUROPEAN PATENT SPECIFICATION

(11) **EP 0 372 551 B1**
(45) Date of publication and mention of the grant of the patent: **02.03.1994**
(21) Application number: 89122564.1
(22) Date of filing: 07.12.1989
(51) Int. Cl.: G21C 19/40

(54) **Reactivity-reducing device for use in on-site fuel assembly storage**
Reaktivitätsvermindernde Vorrichtung zur Anwendung in Vor-Ort-Brennstofflagerung
Dispositif pour réduire la réactivité d'assemblages de combustible nucléaires stockés sur site

(30) Priority: 08.12.1988 US 281148
(43) Date of publication of application: 13.06.1990
(73) Proprietor: WESTINGHOUSE ELECTRIC CORPORATION, Pittsburgh Pennsylvania 15222 (US)
(72) Inventor: Mueller, Donald Eugene, Pittsburgh PA 15239 (US); Boyd, William Artis, Pittsburgh PA 15220 (US)
(74) Representative: Gallo, Wolfgang, Dipl.-Ing. (FH)

(56) References cited:
- EP-A- 0 061 043
- EP-A- 0 151 306
- FR-A- 2 544 541

## Description

The present invention relates generally to the art of storing spent nuclear fuel and, more particularly, to a reactivity-reducing device for use with a spent fuel assembly in a fuel storage facility.

The reactor core of a typical nuclear reactor comprises a large number of fuel assemblies each of which includes a plurality of fuel elements, or rods, containing fissile material, and which fuel assemblies must be removed and replaced with fresh ones when spent at the end of their useful life.

Because of the present lack of permanent off-site disposal facilities for spent nuclear fuel, nuclear power plants are forced to store spent fuel assemblies in pools provided at on-site fuel storage facilities. However, these on-site storage facilities were originally designed to hold only a fraction of the fuel used throughout the operating life of the plant, and spent fuel storage pool reactivity (K-eff) is limited in most nuclear plants by technical specifications to less than 0.95. Thus, these technical specifications impose a definite limit upon the maximum number of spent fuel assemblies that can be stored on-site. The spent fuel pool reactivity limit is also at odds with modern nuclear fuel management strategies in so far as most utilities are increasing the U-235 enrichment of the fuel used.

There exist several options to increasing storage capability or fuel enrichment limits, which options range from very expensive re-racking operations to a criticality safety re-analysis. One of the most effective methods available nowadays is the so-called "burnup credit" analysis in which calculations are performed to show that a fuel assembly can be safely stored after it has reached a minimum amount of burnup depending upon the initial U-235 enrichment of the particular fuel assembly in question. At high enrichments, the burnup requirement may be very large, and often it may be large enough to preclude the storage of a significant number of fuel assemblies.

The problems described above could be overcome by reducing the reactivity of the fuel assemblies to be stored. One method of doing so is to insert neutron absorber or poison rods into each spent fuel assembly in order to reduce its reactivity sufficiently for storage thereof at an on-site facility. This method is shown employed in EP-A-0 061 043 and in FR-A-2 544 541, wherein clusters of poison rods are inserted into spent fuel assemblies and locked therein against removal by means of mechanisms interlocked with or fastened to the top nozzles of the respective fuel assemblies.

A major drawback of these known locking mechanisms stems from their reliance upon the exercise of some human effort for being activated, and from their relatively easy accessibility for being disabled. Under current regulatory standards, neutron absorber rods inserted into a spent fuel assembly and locked therein in a manner making it relatively easy for them to be released and removed may still, despite their locking feature, be regarded as removable absorber rods for which burnup credit could be taken.

It is the principal object of the present invention to provide an improved reactivity-reducing device which does not have the above-mentioned drawback.

Accordingly, the invention resides in a reactivity-reducing device including neutron absorbing means adapted for insertion thereof into a spent nuclear fuel assembly including top and bottom nozzles and, longitudinally extending therebetween, control-rod guide thimbles and an array of fuel rods, characterized by self-latching means automatically effective, upon full insertion of said neutron absorbing means into the spent fuel assembly, to latch the reactivity-reducing device against removal therefrom. The self-latching means becoming automatically effective upon full insertion of the neutron absorbing means practically frees this reactivity-reducing device from the risk of failure due to human error.

Moreover, the self-latching means is disposed on the reactivity-reducing device at a location which is removed from direct access when the neutron absorbing means is in its fully inserted position, thereby rendering the reactivity-reducing device, once installed in the spent fuel assembly, virtually non-removable.

The reactivity-reducing device may also include features such as defined in the remaining subordinate claims, and as pertain to the preferred embodiment of the invention which will now be described, by way of example only, with reference to the accompanying drawings, in which:-
Fig. 1 is an elevational view, partly in section, of a conventional fuel assembly illustrated in vertically foreshortened form and with parts broken away for clarity;
Fig. 2 is an enlarged fragmentary longitudinal sectional view, in vertically foreshortened form, of one of the guide thimbles and of the top and bottom nozzles of the fuel assembly shown in Fig. 1;
Fig. 3 is an enlarged longitudinal sectional view, in vertically foreshortened form, of a reactivity-reducing device embodying the invention;
Fig. 4 is a cross-sectional view taken along line 4--4 of Fig. 3;
Fig. 5 is an elevational view as seen along line 5--5 of Fig. 4;
Fig. 6 is a view showing the reactivity-reducing device of Fig. 3 inserted in the guide thimble of Fig. 2, and showing its self-latching means in a latching position;
Fig. 7 is a cross-sectional view taken along line 7--7 of Fig. 6;
Fig. 8 is a fragmentary longitudinal sectional view similar to the lower portion of Fig. 6 but showing the self-latching means in an unlatching position while the reactivity-reducing device is being either inserted into or withdrawn from the guide thimble; and
Fig. 9 is a view similar to Fig. 6 but illustrating also a removal device or tool for use in withdrawing the reactivity-reducing device from the guide thimble.

In the following description, like reference characters designate like or equivalent parts throughout the several views of the drawings, and terms such as "forward", "rearward", "left", "right", "upward", "downward" and the like are used as words of convenience not to be construed as limiting terms.

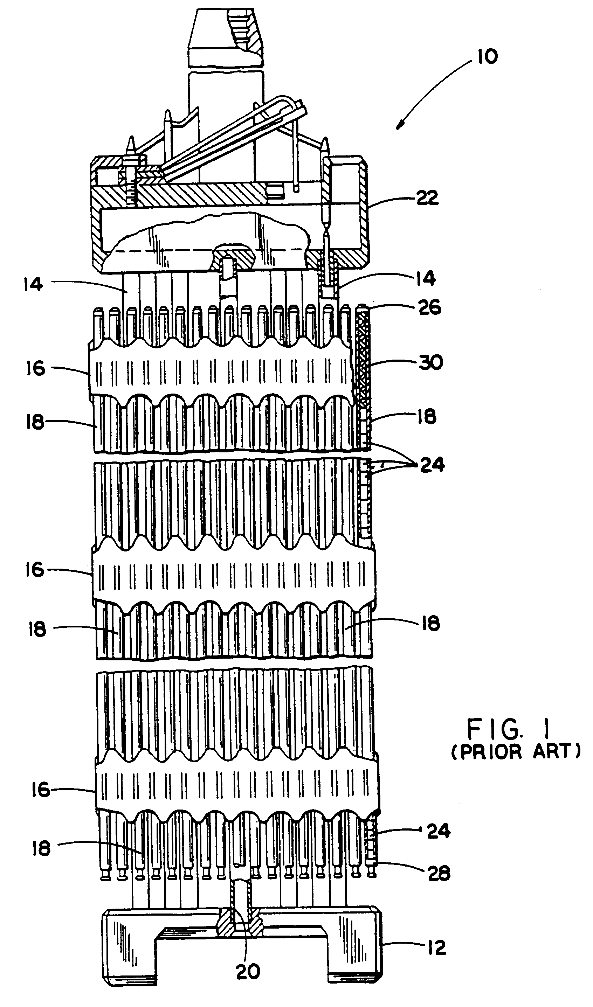

Referring now to the drawings, and particularly to Fig. 1, the fuel assembly illustrated therein and generally designated with reference numeral 10 is of the type generally used in pressurized water reactors, and it comprises basically a lower end structure or bottom nozzle 12 for supporting the assembly on the lower core plate (not shown) in the core region of a nuclear reactor, control-rod guide tubes or thimbles 14 which extend longitudinally upward from the bottom nozzle 12, transverse grids 16 spaced axially apart along the guide thimbles 14, an organized array of elongate fuel rods 18 spaced laterally apart and supported by the grids 16, an instrumentation tube 20, and an upper end structure or top nozzle 22 attached to the guide thimbles 14 at the upper ends thereof. Each fuel rod 18 contains nuclear fuel pellets 24 made of a fissile material, and is hermetically sealed at its opposite ends by means of end plugs 26 and 28. Usually, a plenum spring 30 is disposed between the upper end plug 26 and the pellets 24 in order to maintain the latter firmly stacked.

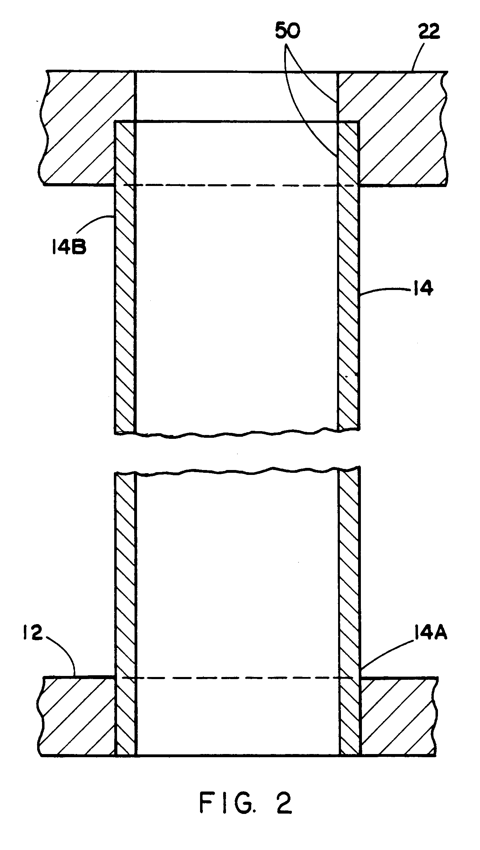

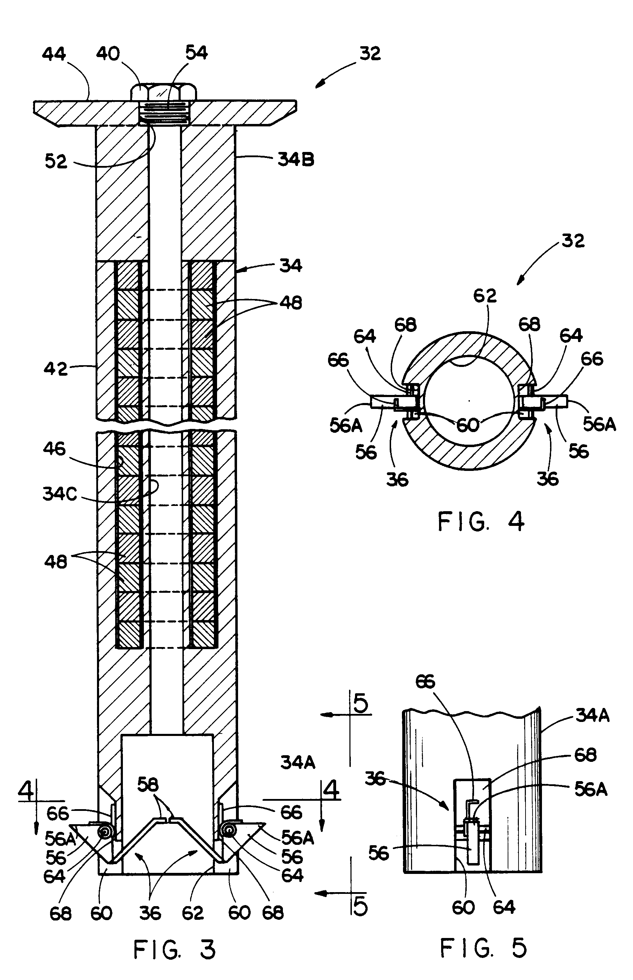

Referring now to Figs. 3-5, the reactivity-reducing device shown therein as embodying the invention and generally designated with numeral 32 is adapted for insertion into a control-rod guide tube, such as the guide thimble 14 partially shown in Fig. 2, and it includes self-latching means adapted to become automatically effective upon full insertion of the reactivity-reducing device into the guide tube to latch the former against removal thereof from the latter.

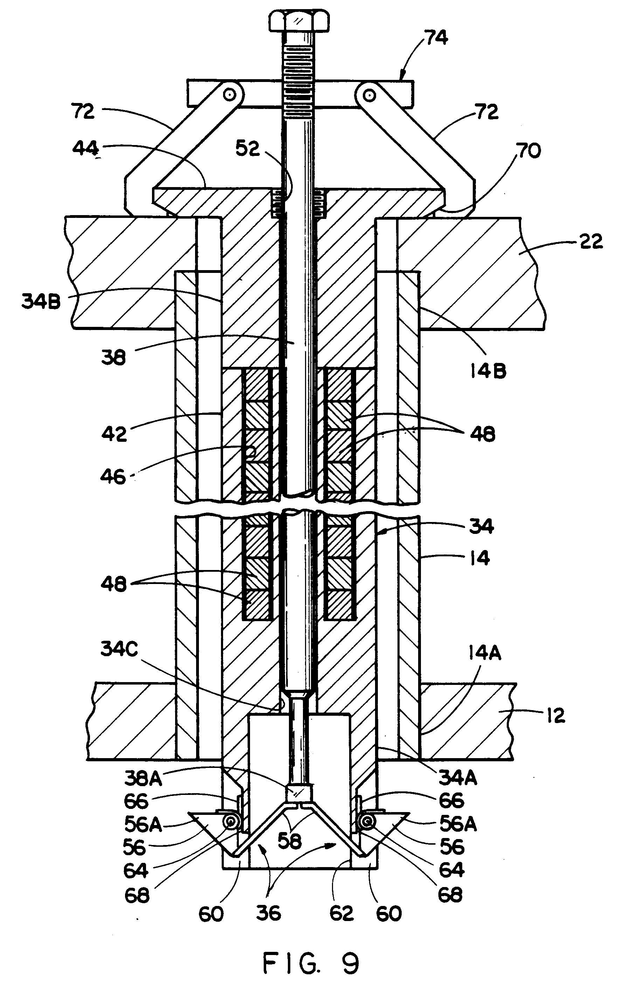

Basically, the reactivity-reducing device 32 comprises an elongated rod 34 having an open-end passageway 34C extending axially therethrough, and self-latching means 36 mounted on a distal end portion 34A of the rod 34 located adjacent the end of the latter which is its leading end during insertion thereof into a guide thimble 14. As, during insertion, the rod 34 reaches substantially its fully inserted position, the self-latching means 36 will automatically move into latching relationship with respect to the lower end 14A of the guide thimble 14 so as, in cooperation therewith, to render the reactivity-reducing device 32 non-removable from the guide thimble 14 without the use of an independent rod-like tool 38 (Fig. 9) inserted through the central passageway 34C of the rod 34 from the end 34B thereof which during insertion is its trailing end. The reactivity-reducing device 32 includes a closure means in form of a plug 40 which is removably secured to the trailing end 34B of the elongated rod 34 so as to close off any access to the passageway 34C leading to the self-latching means 36.

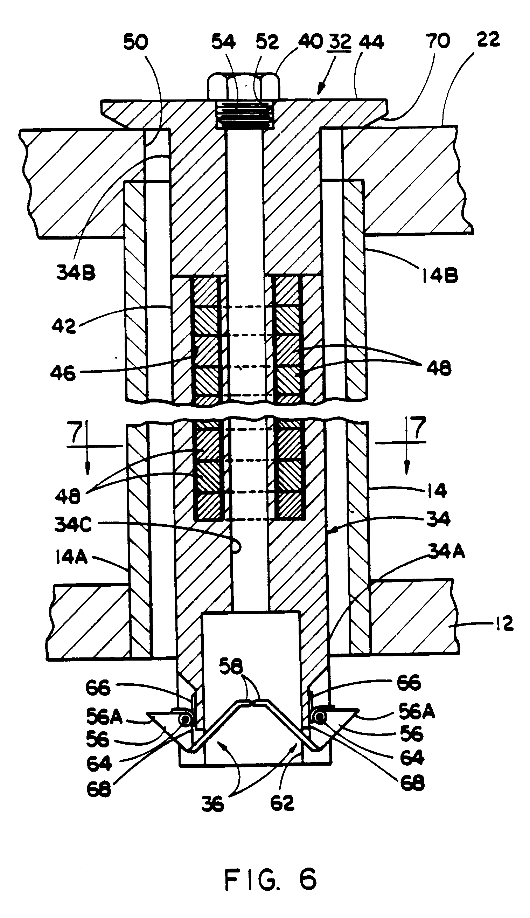

More particularly, the elongated rod 34 has a generally cylindrical tubular portion 42, and an upper head portion 44 connected to the tubular portion 42 at the trailing end 34B of the rod 34. The tubular portion 42 defines therein an annular chamber 46 which contains a stack of annular pellets 48 made of a neutron absorbing material, or poison. The outside diameter of the tubular portion 42 is smaller than the inside diameter of the guide thimble 14 so as to allow insertion of the former into the latter. Preferably, when the tubular portion 42 of the rod 34 is fully inserted into the guide thimble 14, the trailing end 34B of the rod 34 is located adjacent the top nozzle 22 (see Fig. 6) and the upper end portion 14B of the guide thimble 14, and the distal end portion 34A at the leading end of the rod 34 is located adjacent the bottom nozzle 12 and the lower end portion 14A of the guide thimble 14. As seen from Fig. 6, the elongated rod 34 has a length causing the distal end portion 34A thereof to protrude from the lower end of the guide thimble when the rod 34 is fully inserted therein.

The upper head portion 44 of the elongated rod 34 is substantially circular and has an outer diameter larger than the inner diameter of the guide thimble 14 so that it seats upon a surface portion of the top nozzle 22 surrounding an opening 50 formed through the latter and into which the upper end portion 14B of the guide thimble 14 extends, as shown in Figs. 6 and 9. The head portion 44 of the rod 34 thus serves to suspend, or support, the installed reactivity-reducing device 32 from the top nozzle 22. The upper end portion of the passageway 34C extending through the head portion 44 of the rod 34 is provided with internal threads 52 which mate with external threads 54 on the closure plug 40.

As shown in Figs. 3-5, the self-latching means 36 comprises a pair of generally triangular latch members 56 each having connected thereto an unlatching or actuating lever 58 which extends toward the longitudinal axis of the passageway 34C far enough to be engageable by the rod-like tool 38 when inserted through the passageway. The latch members 56 are pivotally supported, by means of pins 64 (see also Fig. 5), in slots 60 formed in diametrically opposed wall portions of the distal end portion 34A of the rod 34, the distal end portion 34A defining an enlarged-diameter recess 62 which communicates with the passageway 34C and into which the actuating levers 58 extend. It should be noted that more than one pair of latch members 56, actuating levers 58, and slots 60 can be employed, if desired.

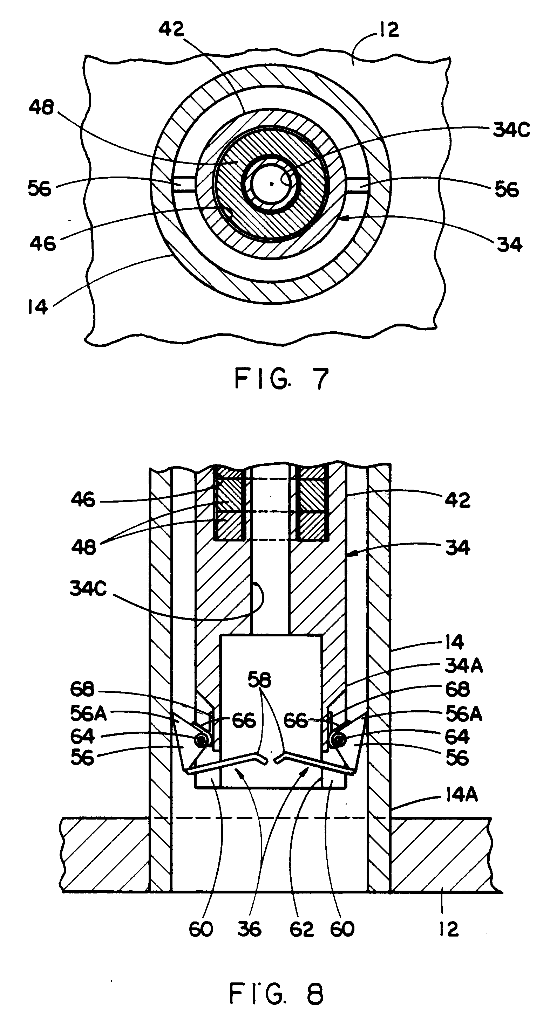

Each of the latch members 56 is pivotally movable between a retracted or releasing position (Fig. 8) and an extended or latching position (Fig. 6), and is biased toward its latching position by means of a spring 66. The springs 66 are wire-like torsion springs disposed on the respective pivot pins 64 and having their opposite legs bearing against edges of the respective latch members 56 and against ledges 68 in the associated slots 60 of the distal end portion 34A of the rod 34, the arrangement being such that the latch members 56 are biased toward their latching positions, as seen from Figs. 3 and 6, in which tips 56A thereof project radially outward beyond the lower end portion 14A of the guide thimble 14 so as to prevent the latch members 56 from being pulled upward into the guide thimble 14.

Withdrawal of the reactivity-reducing device 32 from the guide thimble 14, if desired, requires that the actuating levers 58 be depressed against the action of their associated biasing springs 66 so as to pivotally move the latch members 56, both simultaneously, to their releasing positions (Fig. 8).

Depression of the actuating levers 58 may be effected by first removing the closure plug 40, and then utilizing a separate elongated tool, such as tool 38 shown in Fig. 9, to be inserted into the passageway 34C and pushed down to bring its leading end 38A to bear against the levers 58 so as to depress them. Thus, unlatching of the self-latching mechanism necessitates the conscious taking of several steps, namely, unplugging the passageway 34C, providing an extra tool 38, inserting this tool into the passageway 34C, and manipulating the tool to depress the actuating levers 58, for which reason the reactivity-reducing device 32 itself is properly classifiable as a non-removable device since, once installed, it cannot be removed inadvertently or accidentally and without availability and use of a special tool.

In order to facilitate the intentional withdrawal of the reactivity-reducing device 32 from the associated guide tube 14, the head portion 44 of the rod 34 is provided with an undercut, or beveled, lower rim portion 70 which enables gripping arms 72 of an independent removal device 74 to be readily engaged with the head portion 44 of the rod 34 for the purpose of withdrawing the reactivity-reducing device 32 from the guide tube 14; of course, only after the self-latching mechanism 36 has been defeated through use of the separate elongated tool 38, as set forth above. If desired, a ring or sleeve member (not shown) may be placed over the gripping arms 72 in order to positively guard against the latter's accidental spreading and thereby releasing their hold on the head portion 44 of the reactivity-reducing device 32.

Recapitulating, it is believed that the reactivity-reducing device 32 embodying the invention would be regarded by nuclear regulatory agencies as a non-removable device because, once installed and self-latched, it cannot fall out and, due to its rugged construction, will remain in place even in the event the fuel assembly itself should suffer damage; it cannot, due to the inaccessibility of its self-latching means, be removed without the use of a special tool; and removing it requires the conscious taking of several steps by a person in possession of the tool and authorized to use it if and when desired.

The device 32 embodying the invention will reduce fuel-assembly reactivity enough to permit the storage of fuel having enrichments greater by as much as 3.0 weight-% than the current limit. Or is can also be used to decrease the minimum burnup required for burnup credit by as much as 30,000 MWD/MTU (megawatt days per metric ton of uranium).

## Claims

1. A reactivity-reducing device (32) including neutron absorbing means (34,48) adapted for insertion into a spent nuclear fuel assembly which includes upper and lower end structures (22,12) and, longitudinally extending therebetween, control-rod guide thimbles (14) and an array of fuel rods (18), characterized by self-latching means (36) automatically effective, upon full insertion of said neutron absorbing means (34,48) into the spent fuel assembly, to positively latch the reactivity-reducing device (32) against removal therefrom.

2. A reactivity-reducing device according to claim 1, characterized in that said self-latching means (36) is disposed on the reactivity-reducing device at a location which is removed from direct access when the neutron absorbing means (34) is in its fully inserted position.

3. A reactivity-reducing device according to claim 2, characterized by unlatching means (58) operable to disable said self-latching means (36) and thereby release the reactivity-reducing device for removal thereof from the spent fuel assembly, said unlatching means (58) being accessible and operable only through use of an independent tool (38) separate from the reactivity-reducing device.

4. A reactivity-reducing device according to claim 1, 2 or 3, characterized in that said neutron absorbing means (34) comprises an elongated rod which contains neutron absorbing material (48) and is insertable into one of said control-rod guide thimbles (14) from one end thereof, said elongated rod (34) having a length causing a distal end portion (34A) thereof to protrude from the opposite end of the guide thimble when the elongated rod (34) is fully inserted therein, and said self-latching means (36) being disposed on said distal end portion (34A) and adapted to automatically move into latching relationship with respect to said opposite end of the guide thimble when the elongated rod (34) has reached its fully inserted position.

5. A reactivity-reducing device according to claim 4, characterized in that said self-latching means (36) comprises at least one pair of diametrically opposed latch members (56) supported in said distal end portion (34A) of the elongated rod (34) for movement thereof between a retracted position which permits passage of the latch members through said guide thimble (14), and an extended position which places the latch members (56) into said latching relationship.

6. A reactivity-reducing device according to claim 5, characterized in that each of said latch members (56) is spring-biased (66) toward said extended position thereof.

7. A reactivity-reducing device according to claim 5 or 6, characterized in that said elongated rod (34) has axially extending therethrough a passageway (34C) for receiving an independent rod-like tool (38), and each of said latch members (56) has connected thereto an unlatching member (58) operable to move the associated latch member to its retracted position, the unlatching members (58) connected to said latch members (56) extending therefrom toward the longitudinal axis of said passageway far enough to be engageable by said rod-like tool when inserted through said passageway (34C), the latter being the only access-way to said actuating members (58) in the fully inserted position of the elongated rod (34).

8. A reactivity-reducing device according to claim 7, characterized by a closure means (40) removably affixed to said elongated rod (34) at the end thereof opposite to said distal end portion (34A), and which closure means (40) closes the entrance to said passageway (34C).

9. A reactivity-reducing device according to claim 8, characterized in that said closure means (40) is a plug threadedly engaged in an end portion of said passageway (34C).

10. A reactivity-reducing device according to any one of the claims 4 to 9, characterized in that said elongated rod (34) has, at the end thereof opposite to said distal end portion, a head portion (44) which has a diameter exceeding the inner diameter of the guide thimble (14).

11. A reactivity-reducing device according to claim 10, characterized in that said head portion (44) has formed thereon means (70) engageable with an independent removal tool (72-74) for withdrawing the reactivity-reducing device from the guide thimble after movement of the self-latching means (36) from said latching relationship.

## Patentansprüche

1. Reaktivitätsvermindernde Einrichtung (32) mit Neutronenabsorbermitteln (34, 48) zum Einführen in ein verbrauchtes Kernbrennelement, das obere und untere Endstücke (22, 12) und dazwischen längsverlaufende Steuerstabführungsrohre (14) sowie eine Anordnung von Brennstäben (18) aufweist, gekennzeichnet durch selbstarretierende Mittel (36), die beim vollständigen Einführen der neutronenabsorbierenden Mittel (34, 48) in das verbrauchte Brennelement automatisch wirksam werden, um die reaktivitätsvermindernde Einrichtung (32) gegen Herausziehen zu sperren.

2. Reaktivitätsvermindernde Einrichtung nach Anspruch 1, dadurch gekennzeichnet, daß die selbstarretierenden Mittel (36) an der reaktivitätsvermindernden Einrichtung an einer Stelle angeordnet sind, die dem direkten Zugang entzogen ist, wenn die Neutronenabsorbermittel (34) sich in der voll eingeführten Position befinden.

3. Reaktivitätsvermindernde Einrichtung nach Anspruch 2, gekennzeichnet durch Lösemittel (58), die zum Unwirksammachen der selbstarretierenden Mittel (36) betätigbar sind und dadurch die reaktivitätsvermindernde Einrichtung zu deren Herausnehmen aus dem verbrauchten Brennelement freigeben, wobei die Lösemittel (58) nur durch Verwendung eines besonderen und von der reaktivitätsvermindernden Einrichtung getrennten Werkzeugs (38) zugänglich und betätigbar sind.

4. Reaktivitätsvermindernde Einrichtung nach Anspruch 1, 2 oder 3, dadurch gekennzeichnet, daß die Neutronenabsorbermittel (34) einen länglichen Stab aufweisen, der neutronenabsorbierendes Material (48) enthält und in eines der Steuerstabführungsrohre (14) von dessen einem Ende her einschiebbar ist, wobei der längliche Stab (34) eine Länge hat, die bewirkt, daß sein distaler Endbereich (34A) aus dem entgegengesetzten Ende des Führungsrohrs übersteht, wenn der längliche Stab (34) vollständig eingeführt ist, und daß die selbstarretierenden Mittel (36) an diesem distalen Endbereich (34 A) angeordnet und so ausgebildet sind, daß sie sich automatisch in Arretiereingriff mit Bezug auf das andere Ende des Führungsrohrs bewegen, wenn der längliche Stab (34) seine voll eingeführte Position erreicht hat.

5. Reaktivitätsvermindernde Einrichtung nach Anspruch 4, dadurch gekennzeichnet, daß die selbstarretierenden Mittel (36) mindestens zwei diametral gegenüberliegende Sperrelemente (56) aufweisen, die in dem distalen Endbereich (34A) des länglichen Stabs (34) so gehaltert sind, daß sie zwischen einer zurückgezogenen Position, die das Durchschieben der Sperrelemente durch das Führungsrohr (14) ermöglichen, und einer ausgefahrenen Position beweglich sind, welche die Sperrelemente (56) in den Sperreingriff bringt.

6. Reaktivitätsvermindernde Einrichtung nach Anspruch 5, dadurch gekennzeichnet, daß jedes der Sperrelemente (56) in Richtung seiner ausgefahrenen Position federbelastet (66) ist.

7. Reaktivitätsvermindernde Einrichtung nach Anspruch 5 oder 6, dadurch gekennzeichnet, daß der längliche Stab (34) einen axial durchverlaufenden Kanal (34C) zur Aufnahme eines gesonderten stabartigen Werkzeugs (38) aufweist, und daß jedes der Sperrelemente (56) mit einem Löseelement (58) versehen ist, das im Sinne einer Bewegung des zugehörigen Sperrelements in seine zurückgezogene Position bewegbar ist, wobei die mit den Sperrelementen (56) verbundenen Löseelemente (58) von diesen weit genug zur Längsachse des Kanals verlaufen, um von dem stabartigen Werkzeug ergriffen zu werden, wenn dieses durch den Kanal (34C) eingeführt wird, wobei der Kanal den einzigen Zugang zu den Betätigungselementen (58) in der voll eingeführten Position des länglichen Stabs (34) darstellt.

8. Reaktivitätsvermindernde Einrichtung nach Anspruch 7, gekennzeichnet durch ein Verschlußelement (40), das lösbar an dem zu dem distalen Endbereich (34A) entgegengesetzten Ende des länglichen Stabs (34) befestigbar ist und die Eintrittsöffnung des genannten Kanals (34C) verschließt.

9. Reaktivitätsvermindernde Einrichtung nach Anspruch 8, dadurch gekennzeichnet, daß das Verschlußelement (40) ein Stopfen ist, der in einen Endbereich des Kanals (34C) eingeschraubt ist.

10. Reaktivitätsvermindernde Einrichtung nach einem der Ansprüche 4 bis 9, dadurch gekennzeichnet, daß der längliche Stab (34) an seinem zum distalen Endbereich entgegengesetzten Ende ein Kopfstück (44) aufweist, das einen den Innendurchmesser des Führungsrohrs (14) übersteigenden Durchmesser hat.

11. Reaktivitätsvermindernde Einrichtung nach Anspruch 10, dadurch gekennzeichnet, daß das Kopfstück (44) angeformte Mittel (70) aufweist, die mit einem gesonderten Ausziehwerkzeug (72 bis 74) zum Herausziehen der reaktivitätsvermindernden Einrichtung aus dem Führungsrohr nach Bewegen der selbstarretierenden Mittel (36) außer Sperreingriff ergreifbar sind.

## Revendications

1. Dispositif (32) réducteur de réactivité comprenant un moyen (34, 48) absorbeur de neutrons adapté pour être inséré dans un assemblage de combustible nucléaire épuisé qui comprend des structures (22, 12) d'extrémités supérieure et inférieure et, s'étendant longitudinalement entre ces structures, des tubes-guides (14) pour barres de commande ainsi qu'un réseau de barres (18) de combustible, **caractérisé** par un moyen d'auto-verrouillage (36) agissant automatiquement, lors d'une insertion complète dudit moyen (34, 48) d'absorption de neutrons dans l'assemblage combustible épuisé, de manière à verrouiller positivement le dispositif (32) réducteur de réactivité en empêchant l'extraction de ce dernier.

2. Dispositif réducteur de réactivité selon la revendication 1, **caractérisé** en ce que le moyen d'auto-verrouillage (36) est disposé sur le dispositif réducteur de réactivité à un endroit qui se trouve à l'écart d'un accès direct lorsque le moyen (34) d'absorption de neutrons se trouve dans sa position entièrement insérée.

3. Dispositif réducteur de réactivité selon la revendication 2, **caractérisé** par un moyen de déverrouillage (58) pouvant être actionné de manière à neutraliser ledit moyen d'auto-verrouillage (36) et à libérer de cette manière le dispositif réducteur de réactivité en vue de son extraction de l'assemblage combustible épuisé, ledit moyen de déverrouillage (58) étant accessible et pouvant être actionné uniquement par utilisation d'un outil indépendant (38) séparé du dispositif réducteur de réactivité.

4. Dispositif réducteur de réactivité selon la revendication 1, 2 ou 3, **caractérisé** en ce que le moyen (34) absorbeur de neutrons comprend une longue barre qui contient un matériau (48) absorbeur de neutrons et qui peut être insérée dans l'un des tubes-guides (14) pour barres de commande depuis une extrémité de ces derniers, ladite longue barre (34) ayant une longueur telle qu'une partie d'extrémité distale (34A) de cette barre fait saillie depuis l'extrémité opposée du tube-guide lorsque la longue barre (34) a été entièrement insérée dans ce dernier, et ledit moyen d'auto-verrouillage (36) étant disposé sur ladite partie d'extrémité distale (34A) et adapté pour venir automatiquement dans un état de verrouillage par rapport à ladite extrémité opposée du tube-guide lorsque la longue barre (34) a atteint sa position entièrement insérée.

5. Dispositif réducteur de réactivité selon la revendication 4, **caractérisé** en ce que le moyen d'auto-verrouillage (36) comprend au moins une paire d'éléments de verrouillage (56) diamétralement opposés, supportée dans la partie d'extrémité distale (34A) de la longue tige (34) en vue du déplacement de cette dernière entre une position escamotée qui permet le passage des éléments de verrouillage à travers les tubes-guides (14) et une position avancée qui place les éléments de verrouillage (56) dans ledit état de verrouillage.

6. Dispositif réducteur de réactivité selon la revendication 5, **caractérisé** en ce que chacun des éléments de verrouillage (56) est sollicité élastiquement (66) en direction de leur position avancée précitée.

7. Dispositif réducteur de réactivité selon la revendication 5 ou 6, **caractérisé** en ce que la longue tige (34) comporte un passage (34c) qui s'étend axialement à travers cette tige et qui est destiné à recevoir un outil indépendant (38) analogue à une barre, et chacun des éléments de verrouillage (56) comporte un élément de déverrouillage (68) qui y est fixé et qui peut fonctionner de manière à déplacer l'élément de verrouillage associé jusqu'à sa position escamotée, les éléments de déverrouillage (58) fixés aux éléments de verrouillage (56) s'étendant depuis ces derniers en direction de l'axe longitudinal du passage suffisamment loin pour être rencontré par ledit outil analogue à une barre lorsque celui-ci est inséré à travers le passage (34C), ce dernier étant la seule voie d'accès aux éléments d'actionnement (58) dans la position entièrement insérée de la longue barre (34).

8. Dispositif réducteur de réactivité selon la revendication 7, **caractérisé** par un moyen de fermeture (40) fixé de façon amovible à la longue barre (34), à l'extrémité de cette dernière située à l'opposé de la partie d'extrémité distale (34A), et ce moyen de fermeture (40) ferme l'entrée du passage (34C).

9. Dispositif réducteur de réactivité selon la revendication 8, **caractérisé** en ce que le moyen de fermeture (40) est un bouchon vissé dans une partie d'extrémité du passage (34C).

10. Dispositif réducteur de réactivité selon l'une quelconque des revendications 4 à 9, **caractérisé** en ce que la longue tige (34) comporte, à son extrémité opposée à ladite partie d'extrémité distale, une partie tête (44) qui a un diamètre dépassant le diamètre intérieur du tube-guide (14).

11. Dispositif réducteur de réactivité selon la revendication 10, **caractérisé** en ce que la partie tête (44) comporte un moyen (70) qui est formé sur cette partie et qui peut venir en contact avec un outil indépendant d'extraction (72-74) destiné à extraire du tube-guide le dispositif réducteur de réactivité après que le moyen d'auto-verrouillage (36) cesse d'être dans ledit état de verrouillage.
